# EUROPEAN PATENT APPLICATION

(11) **EP 2 178 046 A2**
(43) Date of publication of application: **21.04.2010**
(21) Application number: 08018222.3
(22) Date of filing: 17.10.2008
(51) Int. Cl.: G06T 7/00

(54) **Multi-image correlation**

(30) Priority: 16.10.2008 US 252997
(71) Applicant: Riverain Medical Group, LLC, Miamisburg, OH 45342-4860 (US)
(72) Inventor: Burns, Richard Vincent, Beavercreek Ohio 45434 (US); Knapp, Jason, Miamisburg Ohio 45342-4860 (US); Worrell, Steve, Miamisburg Ohio 45342-4860 (US)
(74) Representative: Lenzing Gerber Stute

(57) **Abstract**

A technique for registering multiple image representations relating to a common region of interest may involve producing multiple displacements from the image representations for a key point. A final displacement for the key point may be determined from correlations of the multiple displacements.

## Description

### BACKGROUND

Various embodiments of the present invention may relate to image registration, and in particular, to image registration based on anatomical key points (a.k.a., landmarks), multi-dimensional correlations, and/or peak refinement.

In image processing, normalization is a process that changes the range of pixel intensity values. Image normalization is performed to reduce differences related to image acquisition parameters, and in the case of temporal analysis, to equalize contrast and intensity differences between a current image and the a prior image. The image normalization process is applied to various image processing methods including computerized abnormality detection, image enhancement for display, and image registration.

Image registration is the registration of one image to another image by computing a correlation of key locations/points in a source image with a target Image. It should be noted that the source image and the target image may be two regions of a single image that exhibit similarity, e.g., opposing lungs of the same patient, and so the source image may be one part of an image, and the target image may be another part of the same image. The source and target images may also be two separate images, separated by time, of the same subject matter. The image registration process may be used to determine displacements for defining a transformation mapping for the pixels in the source image to locations in the target image.

Key point generation is one aspect of image registration. While every single pixel in the image could be regarded as a key point, taking this approach is computationally burdensome. It may often be sufficient to use a reduced number of key points because the deformations that occur between the source and target images may typically be very similar within a localized region. Neighboring displacements can, therefore, be inferred from the displacement of the key point. A simple method of generating key points is to sample the image in a uniform grid, dividing it into rectangular sectors of equal size. Another method of generating key points is to use intensity variation characteristics, such as gradients, edges, and regions with high curvature.

Published image registration methods are historically intensity based methods or feature based methods. The intensity based methods may operate directly on the image intensity values and may employ a search strategy designed to find optimal alignment of these intensity values. Feature based methods may use easily identifiable geometric features (landmarks) as input to a strategy to find the optimal alignment of these landmark points. Selected landmarks may then be matched in both images based on regional intensity values.

Images, particularly medical images such as chest radiographs, may contain regions where the intensity of the image does not provide useful information for establishing correspondence between key points. Regions which lack reliable information may be corrected, for example, by treating the displacements for those regions as missing values and interpolating the values at those locations from trustworthy information obtained from the parts of the image.

Computer Aided Detection (CAD) of nodules in medical images may suffer from the problem of "false positives." For example, computer aided detection of lung nodules in chest radiographs, which may represent lung cancer, may lead to false positives. Historically, CAD algorithms may make decisions based on localized feature analysis. One exemplary CAD algorithm may provide for tuning of the algorithm parameters to fit the characteristics of a sample set. This CAD algorithm may be based on a uniform grid of key points and on a multi-scale registration method that is based only on image intensity. This CAD algorithm does not use anatomical key points and/or multi-dimensional correlations.

In another CAD algorithm, an exemplary technique called the optical flow has been used to address the image registration problem. In addition to correlation to determine displacement, the optical flow may determine displacement using spatio-temporal derivatives. In the optical flow technique, the key points are displaced in the direction of the gradient of intensity with respect to time.

In contrast to CAD algorithms which make decisions based on localized feature analysis, a radiologist typically has a broader context to reference when making detection and diagnosis decisions. This context may include a patient history, patient demographics, prior images of the patient and bi-lateral symmetry of the human body. Anatomical reasoning can, therefore, be an important aspect of automated analysis of certain medical images, for example, chest radiographs. In CAD algorithms, the ability to reason about anatomical structures may lead to significantly improved performance.

### BRIEF SUMMARY OF EMBODIMENTS OF THE INVENTION

Various embodiments of the invention may be directed to determining the displacement of key points in a multi-dimensional image. Various embodiments of the invention may take such forms as method, apparatus, software, firmware, and/or other forms and/or combinations thereof.

### BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention, wherein:
Figure 1 illustrates an embodiment of a rib crossing which is an example of an anatomical structure about which anatomical reasoning may be performed by a computer aided detection (CAD) algorithm;
Figure 2 (which includes Figures 2a and 2b) illustrates an embodiment of the present invention where anatomical key point generation may occur by enhancing rib crossing locations for selection as key points;
Figure 3 (which includes Figures 3a-3f) illustrates examples of the multiple image representations that may be used in a multi-correlation method according to various embodiments of the invention;
Figure 4 illustrates an apparatus that may be used for implementing all or portions of various embodiments of the invention; and
Figure 5 illustrates a process according to an embodiment of the invention.

### DETAILED DESCRIPTION OF VARIOUS EMBODIMENTS

Reference will now be made to various embodiments of the present invention, examples of which are illustrated in the accompanying drawings. Various embodiments of the present invention may be directed to generating anatomical key points, multi-dimensional correlations, and peak refinement portions.

An embodiment of the present invention may be used to generate one or more key points based on an anatomical structure of a medical image, such as a chest x-ray image. By placing the key points directly on important anatomical landmarks and computing the displacement values for those key points, embodiments of the present invention may be used to provide for the registration of an anatomical structure and for the registration of other regions by inferring from the displacement of the anatomical structure.

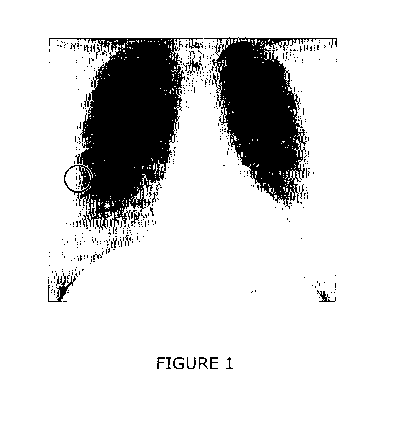

Figure 1 illustrates an embodiment of a rib crossing, which is an example of an anatomical structure about which anatomical reasoning may be performed by a computer aided detection (CAD) algorithm. The rib crossings are the projected areas where the posterior and anterior ribs intersect. These areas may appear as rectangular-like regions along the posterior ribs. An example of a rib crossing is enclosed in the black circle shown in Figure 1. Rib-crossing areas could also be used as landmarks in performing contra-lateral or temporal comparisons.

Some anatomical structures, such as the rib crossings, may be sources of CAD false positives. Therefore, an embodiment of the present invention may be used to add additional, non-localized context to a CAD system for purposes of improving the detection and decision making of the CAD algorithm by registering a current image with a previous image or by registering one region of the patient's body with another region of the patient's body. This registration may allow for the region of interest to be compared to the same region of the body over time or to a symmetric region of the body (e.g., opposing lung).

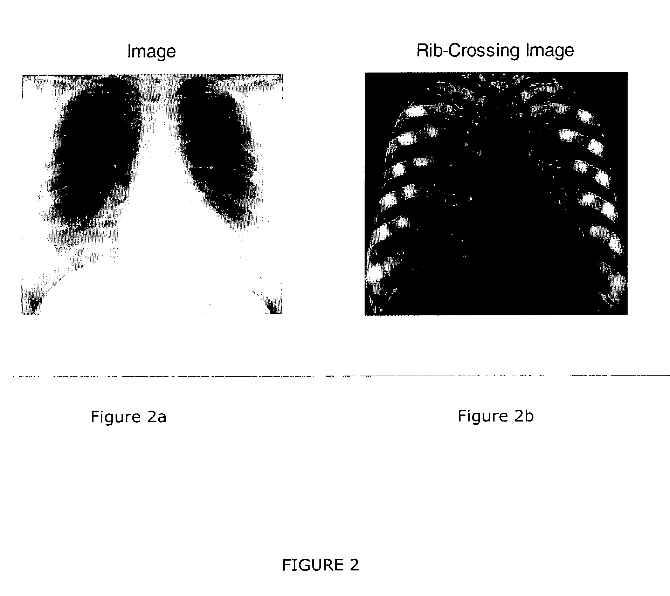

Figure 2 illustrates an embodiment of the present invention where anatomical key point generation may occur by enhancing rib crossing locations for selection as key points. A rib-crossing image may be generated based on pixel classification. A series of feature images may be generated based on a preprocessed chest radiograph. One of the feature images, illustrated in Figure 2a, may then be fed into a neural network or other processor/classifier to predict the presence of a rib-crossing, as illustrated in Figure 2b. Figure 2b shows that such techniques may produce a strong response even for faint rib-crossings.

Multi-dimensional images, including two dimensional images such as chest x-ray images, may include regions of varying intensity and contrast. Because the scale of important anatomy may vary throughout these images, there may be no single image representation that can provide ideal correlation of key points for the purpose of determining their displacements. Different filters may be applied to various types and scales of a multi-dimensional image. For example in a chest x-ray, anatomical tissue such as ribs can be enhanced using a ridge enhancing operator of one scale while vessels can be enhanced using a ridge enhancing operator of a smaller scale. The low contrast "opaque" region of the chest x-ray, which may include the spine, mediastinum, heart, and/or diaphragm regions, may be enhanced by local contrast enhancement and/or noise suppression operators. Applying different filters to specific regions in the image may produce multiple image representations that may allow for the correlations of key points in these regions. Thus, in a multi-dimensional image, multi-dimensional image correlations may be performed by using differing image representations.

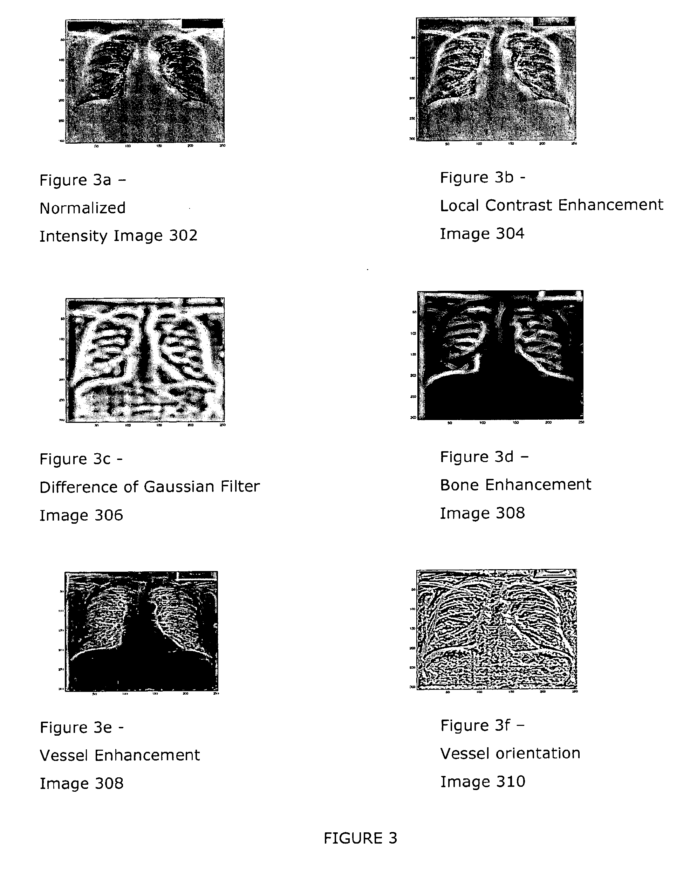

Figure 3, which includes Figures 3a-3f, illustrates examples of types of image representations of a chest x-ray to which one may wish to apply a multi-correlation method. As shown in Figure 3, such representations may enhance various types and scales of the anatomical tissue structure and may increase contrast in low contrast regions, such as the mediastinum. The images of Figures 3a-3f include a normalized intensity image 302, an image 304 with a local contrast enhancement of the normalized intensity image, a difference of Gaussian filter image 306, a bone enhancement image 308, a vessel enhancement image 308, and an image 310 with an orientation of the vessels. The multiple image representations may be subjected to key point correlations for the purpose of determining the displacements of the key points in a multi-dimensional space.

An embodiment of the current invention may use a maximum correlation location as a seed to a peak refinement process. When performing correlation between two images corrupted with noise, the maximum correlation of one image with another image may not occur at the ideal location, for example, due to the effects of noisy pixels in the correlation calculation. To address this, one may use correlation between the two images to identify local maxima meeting a minimum correlation value threshold. A neighborhood about each of the qualifying local maxima may be taken as a candidate for the final displacement location. Measurements may be computed for the underlying intensity of each image representation, such as first- and higher-order Gaussian derivatives, to create a feature space that may be used to compute the similarity of a pixel in one image to a pixel in the other image. The ideal displacement may typically be in the vicinity of one of the local maxima, and thus, the candidate pixel that is most similar in the feature space to its corresponding pixel in the other image may be selected to determine the key point displacement.

A multi-dimensional correlation algorithm may produce multiple displacements for a single key point that may or may not be the same for every dimension. As a result, anatomical reasoning may be performed on the multiple displacements obtained for a particular key point across the dimensions. In an embodiment of the invention, the multi-dimensional correlation algorithm may examine an ensemble of displacements for each key point and may determine whether any of the displacements are outliers with respect to the ensemble of displacements. Outliers may be determined by the orientations of the displacements with respect to a hypothetical horizontal. Any vector (which may correspond to a (displacement) vector formed by connecting a key point location in a reference image with a key point location in a current image) with an orientation that is determined to be different from that of the majority of displacements may be labeled as an outlier. In an embodiment of the invention, a vector's orientation may be determined to be different if it is greater than or less than a predefined threshold. Outliers may also be determined by spatial relationship. The distance from each displacement to every other displacement may be computed, and any displacement that is greater than a predefined distance from the majority may be labeled as an outlier. If no majority can be established, the displacement of that key point may be treated as a missing value and may be inferred from neighboring key points at a later stage. Anatomical reasoning about the ensemble may then be performed by selecting the final displacement among the set of ensemble members that are not outliers. The correlation score of a peak that generated the displacement may be saved and used to produce a weighted combination of the displacements, which may then be used as the final displacement for the key point.

The connective nature of tissue and organs in the human body means that the motion of one region may influence the motion of neighboring regions. For this reason, it can be expected that the displacement of a key point may contain some information about the displacement of its neighbors. Thus, a locally smooth deformation field may be expected as a result of computing the displacements of the key points. To address this condition, each displacement may be considered in the context of its neighbors. If a displacement is considered to be an outlier based on orientation or magnitude with respect to its neighbors, it may be replaced by a displacement inferred from the neighboring displacements.

While the techniques described above have been described in the context of registering radiographic images (and particularly, chest images for the purpose of detecting possible lung nodules), these techniques may be more generally applied. In particular, these techniques may be generally applicable to any application where non-trivial images need to be registered. For example, an embodiment of the present invention may be used when registering one entire x-ray image to another of the same patient, separated by a time interval (temporal-subtraction). An embodiment of the present invention may also be used when bilateral symmetry of the human body provides an opportunity to assess the normality of a region by registering it with the corresponding location on the opposite side of the body (contra-lateral analysis). Yet another embodiment of the invention may allow a portion of an image (e.g., an enlarged view of a particular region of the image) to be registered with the image.

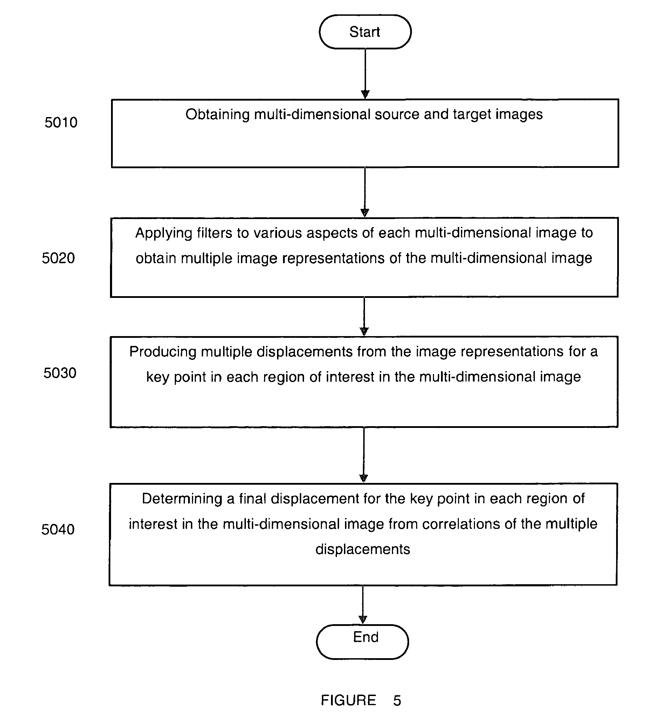

Figure 5 illustrates a process implemented in an embodiment of the invention. Details of the process have already been described above, so Figure 5 represents a summary of the elements of the process. In Block 5010, multi-dimensional source and target images are obtained. In Block 5020, filters may be applied to various aspects of each multi-dimensional image to obtain multiple image representations of the multi-dimensional image. In Block 5030, multiple displacements may be produced from the image representations for a key point in each region of interest in the multi-dimensional image. In Block 5040, a final displacement may be determined for the key point in each region of interest in the multi-dimensional image from correlations of the multiple displacements.

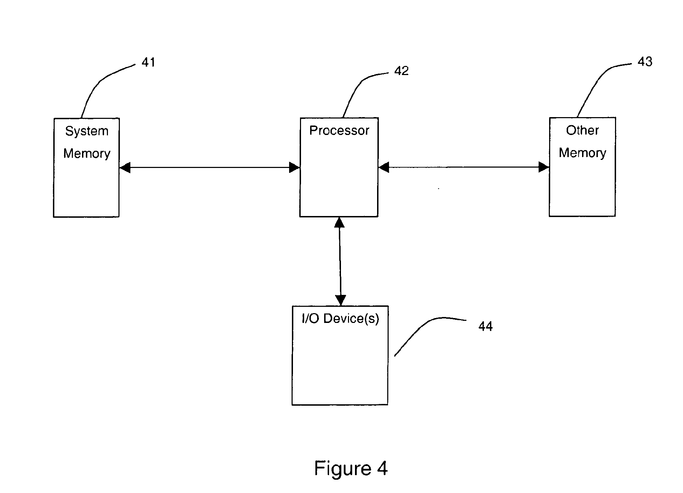

Various embodiments of the invention may comprise hardware, software, and/or firmware. Figure 4 shows an exemplary system that may be used to implement various forms and/or portions of embodiments of the invention. Such a computing system may include one or more processors 42, which may be coupled to one or more system memories 41. Such system memory 41 may include, for example, RAM, ROM, or other such machine-readable media, and system memory 41 may be used to incorporate, for example, a basic I/O system (BIOS), operating system, instructions for execution by processor 42, etc. The system may also include further memory 43, such as additional RAM, ROM, hard disk drives, or other machine-readable storage media. Processor 42 may also be coupled to at least one input/output (I/O) interface 44. I/O interface 44 may include one or more user interfaces, as well as readers for various types of storage media and/or connections to one or more communication networks (e.g., communication interfaces and/or modems), from which, for example, software code may be obtained, e.g., by downloading such software from a computer over a communication network. Furthermore, other devices/media may also be coupled to and/or interact with the system shown in Figure 4.

It will be appreciated by persons skilled in the art that the present invention is not limited by what has been particularly shown and described hereinabove. Rather the scope of the present invention includes both combinations and sub-combinations of various features described hereinabove as well as modifications and variations which would occur to persons skilled in the art upon reading the foregoing description and which are not in the prior art.

## Claims

1. A method for determining the displacement of one or more key points in a group of related image representations, comprising:
producing multiple relative displacements of at least one key point in a plurality of image representations relating to a single region of interest; and
determining a final displacement for the at least one key point based on one or more correlations of the multiple displacements.

2. The method of claim 1, further comprising:
applying filters to selected anatomical structures in the region of interest of at least one image containing the region of interest to enhance components of the anatomical structures to obtain the plurality of image representations.

3. The method of claim 1, wherein said producing multiple displacements comprises producing multiple displacements for a key point, wherein the displacements may vary based on the dimensions of the image representations.

4. The method of claim 1, further comprising applying anatomical reasoning to the displacements for a key point.

5. The method of claim 4, wherein said applying anatomical reasoning comprises examining an ensemble of displacements for the key point and determining if any of the displacements of the ensemble is an outlier.

6. The method of claim 5, wherein a displacement of the key point is determined to be an outlier based on at least one factor selected from the group consisting of: orientation of the displacement; and a spatial relationship of the displacement to other displacements of the ensemble.

7. The method of claim 5, further comprising establishing a group of majority displacements which are determined to be different from the outlier, wherein if no group of majority displacements is established, the displacement of the key point is determined to be a missing value and is inferred from neighboring key points.

8. The method of claim 4, wherein applying anatomical reasoning comprises selecting the final displacement from an ensemble of displacements for the key point that are not determined to be outliers.

9. The method of claim 1, wherein said determining the final displacement comprises saving a correlation score of a peak that generated the final displacement and producing a weighted combination from an ensemble of displacements for the key point.

10. The method of claim 1, further comprising using a maximum correlation location as an input to a peak refinement process.

11. The method of claim 9, further comprising using correlation between two image representations to identify a local maxima meeting a minimum correlation value threshold.

12. The method of claim 11, wherein said determining a final displacement comprises taking a neighborhood of the local maxima as candidates for a final displacement location.

13. The method of claim 11, wherein said determining a final displacement comprises computing measurement for underlying intensity of each image representation to create a feature space used to compute the similarity of a pixel in one image to a pixel of another image, wherein an ideal final displacement is determined to be in a vicinity of the local maxima and a candidate pixel that is most similar in the feature space to a corresponding pixel in the other image is selected to determine the final displacement.

14. The method of claim 5, wherein each displacement determined to be an outlier is replaced by a displacement inferred from neighboring displacements.

15. A computer program embodied on a computer readable medium, the computer program comprising program code for controlling a processor to execute a method comprising:
producing multiple relative displacements of at least one key point in a plurality of image representations relating to a single region of interest; and
determining a final displacement for the at least one key point based on one or more correlations of the multiple displacements.

16. The computer program of claim 15, wherein the method further comprises applying filters to selected anatomical structures in the region of interest of at least one image containing the region of interest to enhance components of the anatomical structures to obtain the plurality of image representations.

17. The computer program of claim 15, wherein said producing multiple displacements comprises producing multiple displacements for a key point, wherein the displacements may vary based on the dimensions of the image representations.

18. The computer program of claim 15, wherein the method further comprises applying anatomical reasoning to the displacements for the key point.

19. The computer program of claim 18, wherein said applying anatomical reasoning comprises examining an ensemble of displacements for the key point and determining if any of the displacements of the ensemble is an outlier.

20. The computer program of claim 19, wherein a displacement of the key point is determined to be an outlier based on at least one factor selected from the group consisting of: orientation of the displacement; and a spatial relationship of the displacement to other displacements of the ensemble.

21. The computer program of claim 19, wherein the method further comprises establishing a group of majority displacements which are determined to be different from the outlier, wherein if no group of majority displacements is established the displacement of the key point is determined to be a missing value and is inferred from neighboring key points.

22. The computer program of claim 18, wherein applying anatomical reasoning comprises selecting the final displacement from an ensemble of displacements for the key point that are not determined to be outliers.

23. The computer program of claim 15, wherein said determining the final displacement comprises saving a correlation score of a peak that generated the final displacement and producing a weighted combination from an ensemble of displacements for the key point.

24. The computer program of claim 15, wherein the method further comprises using a maximum correlation location as an input to a peak refinement process.

25. The computer program of claim 23, wherein the method further comprises using correlation between two image representations to identify a local maxima meeting a minimum correlation value threshold.

26. The computer program of claim 25, wherein said determining a final displacement comprises taking a neighborhood of the local maxima as candidates for a final displacement location.

27. The computer program of claim 25, wherein said determining a final displacement comprises computing measurement for underlying intensity of each image representation to create a feature space used to compute the similarity of a pixel in one image to a pixel of another image, wherein an ideal final displacement is determined to be in a vicinity of the local maxima and a candidate pixel that is most similar in the feature space to a corresponding pixel in the other image is selected to determine the final displacement.

28. The computer program of claim 18, wherein each displacement determined to be an outlier is replaced by a displacement inferred from neighboring displacements.

29. An apparatus for determining the displacement of one or more key points a group of related image representations, comprising:
means for producing multiple relative displacements of at least one key point in a plurality of image representations relating to a single region of interest; and
determining a final displacement for the at least one key point based on one or more correlations of the multiple displacements.

30. The apparatus of claim 29, further comprising:
means for filtering selected anatomical structures in the region of interest of at least one image containing the region of interest to enhance components of the anatomical structures to obtain the plurality of image representations.

31. The apparatus of claim 29, wherein said means for producing multiple displacements comprises means for producing multiple displacements for a key point, wherein the displacements may vary based on the dimensions of the image representations.

32. The apparatus of claim 29, further comprising means for applying anatomical reasoning to the displacements for a key point.
